# DEMANDE DE BREVET EUROPEEN

(11) **EP 3 862 738 A1**
(43) Date de publication de la demande: **11.08.2021**
(21) Numéro de dépôt: 21152885.6
(22) Date de dépôt: 22.01.2021
(51) Int. Cl.: G01L 1/12, G01M 3/36, G01M 3/40, G01N 17/00, G01N 27/83

(54) **PROCEDE DE DETECTION D'AU MOINS UN DEFAUT AU SEIN D'UNE STRUCTURE FERROMAGNETIQUE**

(30) Priorité: 10.02.2020 FR 2001291
(71) Demandeur: L'AIR LIQUIDE, SOCIETE ANONYME POUR L'ETUDE ET L'EXPLOITATION DES PROCEDES GEORGES CLAUDE, 75007 Paris (FR); École Normale Supérieure Paris-Saclay, 91190 Gif-sur-Yvette (FR)
(72) Inventeur: FURTADO, Jader, 78350 Les Loges-En-Josas (FR); GARY, Daniel, 91190 GIF SUR YVETTE (FR); HUBERT, Olivier, 91190 GIF SUR YVETTE (FR); OUADDI, Achraf, 78350 Les Loges-En-Josas (FR)
(74) Mandataire: Air Liquide

(57) **Abrégé**

Un procédé de détection d'au moins un défaut au sein d'une structure ferromagnétique, comprend les étapes de:
a) Soumettre la structure ferromagnétique à au moins un examen piézomagnétique, et
b) Déduire de l'examen opéré à l'étape a) la présence d'un défaut.

## Description

L'invention concerne un procédé de détection d'au moins un défaut au sein d'une structure ferromagnétique, en particulier les adsorbeurs, de préférence les adsorbeurs suivant un cycle PSA H2, les réservoirs de stockage de gaz, de préférence d'hydrogène et les réacteurs de reformage de gaz. De manière générale, le procédé s'appliquera sur tous les équipements ferromagnétiques nécessaires à la production d'hydrogène par vaporeformage d'hydrocarbures (SMR), en particulier de gaz naturel.

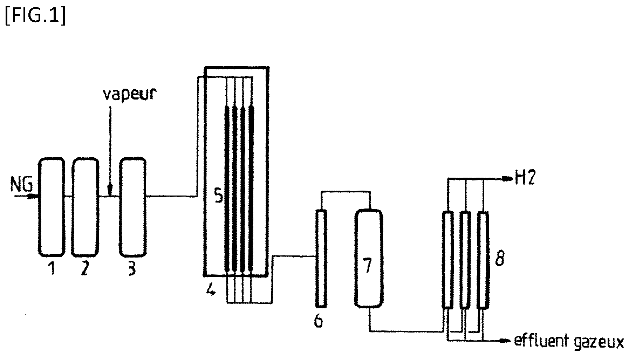

Le procédé de production d'hydrogène par vaporeformage d'hydrocarbures comprend les étapes suivantes [Fig. 1]:
(1) prétraitement du gaz naturel par hydrodésulfuration 2 pour retirer les composés soufrés de la charge et éviter tout empoisonnement des catalyseurs;
(2) reformage des hydrocarbures lourds dans un pré-reformeur 3 permettant d'éviter le craquage de ces hydrocarbures lourds dans le réacteur principal;
(3) reformage dans un réacteur tubulaire 4, 5;
(4) conversion 7 du monoxyde de carbone en hydrogène et dioxyde de carbone par la réaction du gaz à l'eau (ou Water Gas Shift en anglais) CO + H2O = CO2 + H2;
(5) purification du mélange de gaz de synthèse pour produire de l'hydrogène à plus de 99.99% de pureté dans une unité PSA 8 (Pressure Swing Adsorption = Adsorption à variation de pression) comprenant plusieurs adsorbeurs.

Les différents réacteurs sont opérés dans un mode quasi statique : la pression reste constante, la température varie faiblement, mais le débit peut varier notablement si le client final ne demande pas le débit nominal.

Les différents adsorbeurs opérés à température ambiante sont soumis à des cycles de pression important (ex pression d'adsorption proche de 25 à 30 bars et pression d'élution proche de la pression atmosphérique) avec des durées de cycles entre 3 et 6 minutes, comprennent les phases de pressurisation, adsorption et dépressurisation. Un PSA peut subir de 15 à 20 cycles par heure soit plus de 400 cycles par jour donc plus de 170000 cycles par an. L'intégrité structurelle de l'adsorbeur est de ce fait exposée à un mode d'endommagement dit de fatigue et qui sera accéléré par la présence d'H2. Ce phénomène d'endommagement est bien connu et les opérateurs vont devoir démontrer aux autorités que l'unité PSA est exploitée en toute sécurité. Ainsi des contrôles périodique type CND (Contrôle Non-Destructif) sont effectués via l'aide de personnels qualifiés et certifiés. Ces CND font appel à des techniques ultrasoniques du type TOFD (Time of Flight Diffraction = Mesure de temps de vol de l'onde diffractée) voir PAUT (Phase Array Ultrasonic Technique = contrôle par ultrasons avec transducteur multiéléments). Ces techniques sont susceptibles de détecter la présence de défaut sur la chaudronnerie de l'adsorbeur, les zones les plus critiques se trouvant à proximité des cordons de soudures. En effet un adsorbeur offre un volume de plus de 10m³. Des tôles sont cintrées et assemblés par soudures longitudinales pour constituer la virole, des embouts sont ensuite rapportés en haut et en bas de la virole, puis assemblés par un cordon de soudure circonférentiel. Toutes ces soudures sont ensuite radiographiées pour validation. La radiographie est une technique CND bien connue mais lourde à mettre en œuvre. Un défaut originel peut s'avérer critique pour l'intégrité structurelle de l'adsorbeur pendant sa durée d'exploitation qui en principe est supérieure à 10 ans.

Un adsorbeur vieillit au cours du temps et ce vieillissement résulte du cyclage. Un défaut de construction (soudure) non détecté à la mise en service de l'installation va évoluer au cours du temps. Ce micro défaut va grossir débouchant sur une fissure. Cette fissure à son tour va évoluer et se propager au travers de l'épaisseur de la matière (quelques dizaines de millimètres : typiquement 35mm), pour déboucher vers une fissure traversante de l'intérieur vers l'extérieur. Dès lors, l'adsorbeur perd son intégrité structurelle car il ne permet plus le confinement du gaz, il s'ensuit l'apparition d'une fuite de gaz toxique, inflammable. L'exploitant doit alors arrêter le fonctionnement de l'installation pour réaliser sa maintenance ou son remplacement.

Pour se prémunir d'un tel arrêt non programmé et coûteux, l'exploitant réalise périodiquement des contrôles CND de l'installation en cours d'opération, mais souvent dès que le CND détecte la présence d'un défaut il est trop tard, la fissure est déjà amorcée. L'idée derrière la technique proposée est de pouvoir implémenter sur les adsorbeurs un CND sensible et fiable pour assurer le suivi permanent de l'intégrité structurelle des équipements (SHM). Idéalement la technique recherchée doit être extrêmement sensible, par exemple apte à suivre l'évolution de la microstructure d'un matériau causée par la génération d'un défaut qui au cours du temps va conduire à la formation d'une fissure. L'identification d'un défaut aux premiers stades de la formation d'une fissure laisse le temps à l'exploitant de planifier la phase de maintenance de l'équipement défectueux.

Le problème est dès lors de proposer un procédé de détection non destructif d'un défaut au sein d'une structure formée d'un matériau métallique, lequel soit efficace et fiable de manière à permettre d'assurer le suivi permanent de l'intégrité de structures, équipements ou installations, y compris pendant leur fonctionnement, en particulier les adsorbeurs, de préférence les adsorbeurs suivant un cycle PSA H2, les réservoirs de stockage de gaz, de préférence d'hydrogène et les réacteurs de reformage de gaz.

Une solution selon l'invention est un procédé de détection d'au moins un défaut au sein d'une structure ferromagnétique, comprenant les étapes de :
a) Soumettre la structure ferromagnétique à au moins un examen piézomagnétique, et
b) Déduire de l'examen opéré à l'étape a) la présence d'un défaut.

Selon le mode de réalisation considéré, l'invention peut comprendre l'une ou l'autre des caractéristiques suivantes :
- l'examen de l'étape (a) est opéré au niveau de, i.e. sur, la surface externe de la structure à examiner; Notons que l'examen, même en étant opéré sur la surface externe de la structure à examiner, peut détecter une fissure initiée en face interne de la structure à examiner.
- l'examen opéré à l'étape (a) est opéré au moyen d'un dispositif de mesure piézomagnétique comprenant au moins un capteur de flux magnétique ou au moins un bobinage comprenant un empilement de spires en cuivre agencées autour d'un noyau ferromagnétique ;
- l'examen opéré à l'étape (a) est passif et opéré au moyen d'au moins un bobinage comprenant un empilement de spires en cuivre agencées autour d'un noyau ferromagnétique ;
- le dispositif de mesure piézomagnétique est un magnétomètre ;
- le dispositif de mesure piézomagnétique est configuré pour détecter une ou des variations d'aimantation produisant une différence de potentiel aux bornes de la bobine ;
- le dispositif de mesure piézomagnétique n'est pas en contact de la surface sur laquelle est opéré l'examen.
- le dispositif de mesure piézomagnétique est placé à une distance de la surface sur laquelle est opéré l'examen comprise entre 0,2 cm et 10 cm.
- ledit défaut comprend au moins une cavité ou une fissure, en particulier une microfissure.
- le défaut est une microfissure de moins de 100µm ;la structure est choisie parmi les adsorbeurs, les réservoirs de stockage de gaz et les réacteurs de reformage de gaz. Notons que les adsorbeurs pourront suivre des cycles PSA, VSA (adsorption à variation de vide) ou TSA (adsorption à variation de température) ; La structure à examiner est soumise à un chargement mécanique cyclique
- la structure est un adsorbeur suivant un cycle PSA visant à produire de l'hydrogène à partir d'un flux de gaz naturel et l'étape a) est réalisée pendant le cycle PSA.
- le procédé comprend en outre une étape qui consiste à avertir l'utilisateur en cas de détection d'un défaut, en particulier de déclencher une alerte sonore ou visuelle, via par exemple une interface homme-machine (IHM) connectée (sans fil) ou non.
- le dispositif de mesure piézomagnétique est configuré pourtransmettre les signaux de mesure à des moyens de traitement d'information, par exemple un serveur ou un ordinateur permettant d'analyser et/ou traiter lesdits signaux de mesure.

L'invention va maintenant être précisée grâce à la description détaillée suivante, faite à titre illustratif mais non limitatif.

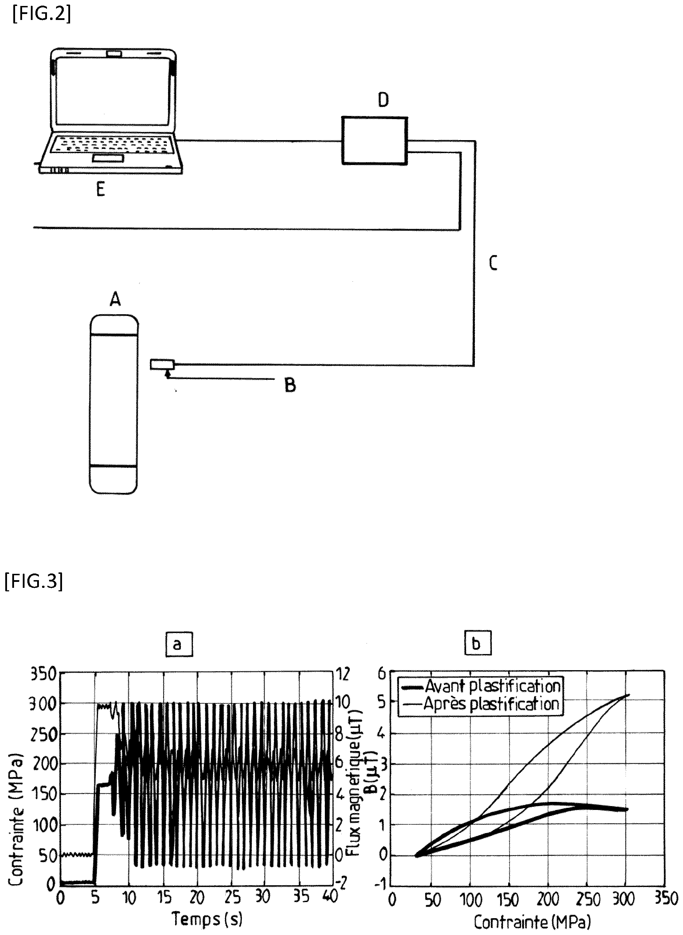

[Fig. 2] La figure 2 représente un schéma simplifié de l'examen piézomagnétique sur un adsorbeur. En effet, on y voit :
- le dispositif de mesure piézomagnétique B placé à proximité de la surface externe de l'adsorbeur A ;
- un moyen C de transmission de la mesure prise par le dispositif B à une carte d'acquisition D et à un ordinateur E.

Le procédé CND selon l'invention repose sur la réalisation de mesures passives par piezomagnétisme. En effet, la structure elle-même va jouer le rôle de capteur de flux magnétique. Elle est associée à un capteur/transmetteur de flux, i.e. fluxmètre ou bobinage adéquat, qui est placé à proximité de la structure pour récupérer et transmettre les signaux/niveaux de flux magnétiques induits par la structure.

D'une façon générale, dans un échantillon en matériau(x) ferromagnétique(s), tel que par exemple de l'acier au carbone, l'application d'un champ magnétique peut provoquer une déformation de l'échantillon appelée magnétostriction.

Inversement, une contrainte appliquée à un matériau initialement aimanté, même faiblement, peut modifier l'état magnétique du matériau. C'est l'effet Villari.

Le comportement magnétique est ainsi sensible à tout chargement mécanique et l'évolution observée de celui-ci est différente selon le niveau du chargement, de sa direction et de sa nature puisqu'elle dépend de l'état microstructural du matériau (microplasticité, microfissures....).

Un réservoir d'hydrogène en acier est un objet ferromagnétique de grande dimension soumis à la fois à des chargements mécaniques cycliques compte tenu des périodes de remplissage/vidange et au champ magnétique terrestre. Il est pour cette raison susceptible de présenter un effet Villari, donc une variation d'aimantation, puis par voie de conséquence une modification du flux dans l'air environnant (flux de fuite) susceptible d'être captée soit :
- par un capteur du flux commercial commercialisé sous la dénomination FLUXMASTER.
- Par un bobinage constitué d'un empilement de spires en cuivre autour d'un noyau ferromagnétique. La sensibilité du bobinage dépendra du nombre de spires utilisé qui variera en fonction de l'intensité du signal du flux ferromagnétique de la structure ferromagnétique sous surveillance.

Pour opérer la mesure, le capteur ou la bobine sont placés auprès de la surface à inspecter en cherchant la position permettant de capter l'amplitude maximale du flux magnétique.

Par exemple, lorsqu'un défaut de type de fissure de fatigue s'amorce, le champ de contrainte à longue distance est modifié par les phénomènes de microplasticité locale ou de relaxation de contraintes. Les champs mécaniques se combinent aux contraintes cycliques associées au chargement en fonctionnement normal ce qui conduit à une modification du signal de Villari.

La technique peut être utilisée pour inspecter d'autres types de défauts tels que piqures de corrosion, défauts de soudage ou tout autre défaut à l'origine d'une modification du champ de contraintes nominal.

Une première étude a été menée sur deux aciers de nature différente : un acier ferrito-martensitique (dual-phase) et un acier ferrito-perlitique issu d'une structure industrielle. Les résultats obtenus sont proches et cohérents pour les deux matériaux (volume de matière de moins de 10cm³). Les variations du flux magnétique mesurées à 10mm de la surface au cours d'un chargement mécanique standard sont faibles (quelques micro-Tesla en amplitude), elles sont néanmoins détectables par le fluxmètre. Lorsque le matériau est désaimanté, le signal varie d'abord de manière transitoire (sur quelques cycles) avant d'atteindre un régime stabilisé (Fig. 3a). Les mesures ont également permis de mettre en évidence une sensibilité intéressante du flux magnétique à la plasticité : [Fig. 3] la figure 3b montre ainsi l'évolution typique d'un cycle piézomagnétique avant/après déformation plastique localisée de moins de 3% d'amplitude.

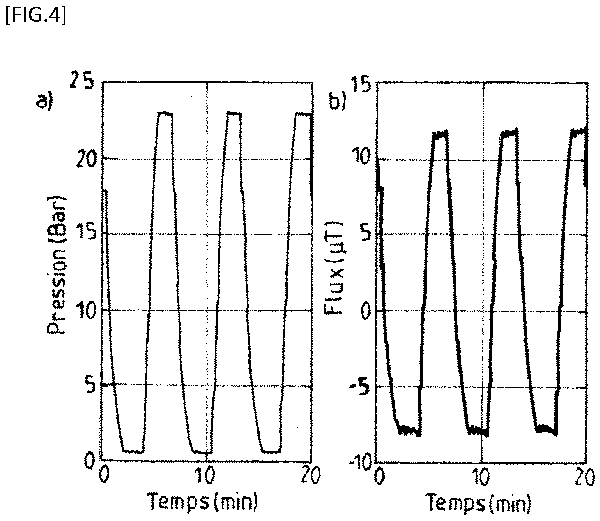

[Fig. 4] La figure 4 illustre les variations cycliques de flux de fuite en fonction du temps au cours de plusieurs séries de pression/dépression dans un absorbeur PSA (période de quelques minutes). Ces mesures ont prouvé deux choses : le fluxmètre capte sans difficulté des variations d'induction en relation directe avec le niveau de pression et d'un niveau supérieur (12µT) aux niveaux constatés en laboratoire (5µT). Les cycles piézomagnétiques propres à ces installations anciennes ont atteint depuis longtemps leur régime stabilisé. L'influence du champ magnétique terrestre se traduit par une aimantation significative des matériaux conduisant à ces amplitudes deux fois plus importante par rapport aux mesures sur éprouvette. Ainsi, ceci permet de renforcer la capacité de détection des anomalies.

Le procédé selon l'invention permet de surveiller l'intégrité d'installations qui peuvent être sujettes à des dégradations de type propagation de fissures de fatigue (pression de gaz cyclique sur une période d'une à quelques minutes), fluage (déformation du matériau à haute température) ou HTHA (High Temperature Hydrogen Attack = Attaque par l'hydrogène à haute température), dans un milieu corrosif (l'hydrogène diffuse sous forme atomique et s'associe au carbone pour former du méthane).

Le procédé de l'invention peut être mis en œuvre à température ambiante, ou à des températures allant jusqu'à quelques centaines de degrés au-dessus ou au-dessous de 0°C, de préférence entre -200°C et 200°C.

A titre d'exemple, le procédé selon l'invention pourra s'appliquer sur les structures suivantes :
- Les adsorbeurs suivant un cycle PSA, les capacités de stockage d'hydrogène équipant les stations hydrogène où la pression peut atteindre 1000 bar mais avec une fréquence de cyclage moindre,
- Les réacteurs ou pièces de transitions présentes dans le procédé de reformage de gaz possiblement affectés par du HTHA. Par pièce de transition on entend par exemple un tuyau qui permet la jonction entre deux équipements comme un réacteur et un échangeur, un réacteur et un pot séparateur de phase liquide/gaz, deux réacteurs.

Il peut également s'appliquer sur d'autres procédés tels que :
- Les adsorbeurs suivant un cycle VSA (vacuum swing adsorption) typiquement mis en œuvre pour purifier un flux d'hydrogène impur ou un flux d'oxygène impur
- Las adsorbeurs suivant un cycle TSA (temperature swing adsorption) typiquement mis en œuvre pour purifier un flux d'air (front end purification unit en anglais ou épuration en tête en français) alimentant une boite froide, voire un flux d'hydrogène quasi pur (par exemple pour éliminer des traces de CO sur un sorbant).

## Revendications

1. Procédé de détection d'au moins un défaut au sein d'une structure ferromagnétique , comprenant les étapes de :
a) Soumettre la structure ferromagnétique à au moins un examen piézomagnétique, et
b) Déduire de l'examen opéré à l'étape a) la présence d'un défaut.

2. Procédé selon la revendication 1, **caractérisé en ce que** l'examen de l'étape (a) est opéré au moyen d'un dispositif de mesure piézomagnétique comprenant au moins un capteur de flux magnétique ou au moins un bobinage comprenant un empilement de spires en cuivre agencées autour d'un noyau ferromagnétique.

3. Procédé selon l'une des revendications 1 ou 2, **caractérisé en ce que** l'examen de l'étape (a) est opéré au niveau de la surface externe de la structure à examiner.

4. Procédé selon la revendication 3, **caractérisé en ce que** le dispositif de mesure piézomagnétique n'est pas en contact de la surface sur laquelle est opéré l'examen.

5. Procédé selon la revendication 3 ou 4, **caractérisé en ce que** le dispositif de mesure piézomagnétique est placé à une distance de la surface sur laquelle est opéré l'examen comprise entre 0,2 cm et 10 cm.

6. Procédé selon l'une des revendications 1 à 5, **caractérisé en ce que** ledit défaut comprend au moins une cavité ou une fissure, en particulier une microfissure.

7. Procédé selon l'une des revendications 1 à 6, **caractérisé en ce que** le défaut est une microfissure de moins de 100 µm.

8. Procédé selon l'une des revendications 1 à 7, **caractérisé en ce que** la structure est choisie parmi les adsorbeurs, les réservoirs de stockage de gaz et les réacteurs de reformage de gaz.

9. Procédé selon la revendication 8, **caractérisé en ce que** la structure est un adsorbeur suivant un cycle PSA visant à produire de l'hydrogène à partir d'un flux de gaz naturel et l'étape a) est réalisée pendant le cycle PSA.

10. Procédé selon l'une des revendications 1 à 9, **caractérisé en ce qu'**il comprend en outre une étape qui consiste à avertir l'utilisateur en cas de détection d'un défaut, en particulier de déclencher une alerte sonore ou visuelle.

11. Procédé selon l'une des revendications 1 à 10, **caractérisé en ce que** le dispositif de mesure piézomagnétique est configuré pour transmettre les signaux de mesure à des moyens de traitement d'information, par exemple un serveur ou un ordinateur permettant d'analyser et/ou traiter lesdits signaux de mesure.
